# EUROPEAN PATENT SPECIFICATION

(11) **EP 4 227 124 B1**
(45) Date of publication and mention of the grant of the patent: **25.06.2025**
(21) Application number: 22425005.0
(22) Date of filing: 10.02.2022
(51) Int. Cl.: B60J 1/10, B60J 10/70, B61D 25/00, B60J 1/00

(54) **WINDOW ASSEMBLY**
FENSTERBAUGRUPPE
ENSEMBLE FENÊTRE

(43) Date of publication of application: 16.08.2023
(73) Proprietor: Isoclima S.p.A., 35042 Este (Padova) (IT)
(72) Inventor: POLI, Elisabetta, 35043 Monselice (PD) (IT); SANDRIN, Cristian, 35042 Este (PD) (IT)
(74) Representative: Seitz, Ralf Hans Frank

(56) References cited:
- DE-A1- 2 820 620
- US-A- 2 575 854
- US-A- 4 591 203

## Description

The present invention refers to a window assembly used, for instance, in a vehicle or building or, for instance, in a train or a car. More especially the invention could be used, for instance, as a side window installed in a high-speed passenger-train.

Lateral cab and body side windows for high capacity means of transportation, for instance, buses, trains, and metro are designed for services in a wide range of environmental and operational conditions. Generally, such windows use a glazing, either a single pane laminated safety glass unit (LGU) or a double pane insulated glazing unit (IGU) connected to the main structural body by a metallic frame.

The metallic frame is replaced increasingly by an extruded circumferential structural gasket that has structural properties in order to withstand defined static and dynamic loads caused by the operating conditions like, for instance, aerodynamic pressures, inertial forces due to acceleration or impacts/crashes, human loads and different combination of the mentioned actions in the spatial directions.

DE 28 20 620 A1 describes an elastic sealing and fixing strip, especially for a windscreens in a motor vehicle bodywork. The windscreen is located in a window opening, formed by a flange rim of a motor vehicle body, and is sealed and held by a sealing and fixing strip that has a receiving groove corresponding to the thickness of the windscreen. The sealing and fixing strip can be provided with an L-shaped support strip 15 that surrounds the front edge of the groove which receives the windscreen.

US 2 575 854 relates to the field of rail vehicles and provides a double glass sash construction used in windows of air-conditioned railway cars. The sash construction has a pair of generally rectangular rim members forming a frame having a channel-like recess for receiving and clamping the edges of the glass panes, fasting elements to hold the rim members in clamping position, and resilient separator and glazing strips positioned at the edges of the panes from each other and from the rim members.

US 4 591 203 describes a vehicle body that has a window opening defined by a peripheral pinchweld flange which includes a plurality of slots. The window opening is closed by a modular rear quarter window assembly of the type having a glass window panel which has a molded PVC frame formed around its peripheral edge.

The structural gasket presents significant advantages towards traditional solutions based on metallic frames coupling glazing and body structure. The main advantages of the structured gasket made of polymeric material are, for instance, the elimination of heavy and expensive parts like the metallic frame itself.

However, the main problem of the structural gasket is related to the need of structural consistency of the gasket in transferring of comparable mechanical stress and loads from the glazing to the body structure and vice versa.

Accordingly, it is an object of the invention to provide a window assembly avoiding the above mentioned problem, particularly, avoiding heavy and stiff structural gaskets in case of increased operational loads on windows.

This object is solved by the window assembly of the invention as mentioned in claim 1. Accordingly, the window assembly or window of the invention for a vehicle or building, particularly for a high-speed passenger-train, comprises a glazing that has one or more panes made of glass, plastic, and/or ceramic material, a window opening provided in a body of, for instance, the vehicle or building, a frame like gasket provided between the glazing and the body and holding the glazing on the body within the window opening, and a reinforcing device for reinforcing the gasket. The reinforcing device of the invention provides a bracket, at least one insert or several inserts, like, for instance, screws or pins, and an equalizing strip, wherein the gasket has a gasket intermediate portion arranged between the bracket and the equalizing strip and wherein the insert or inserts couple the bracket to the equalizing strip.

The remarkable advantage of the invention is that, by using this reinforcing device, usual gaskets could be used even in the case of higher operational loads and stresses on the window and that this reinforcing device allows a reinforcing of the gasket and, thus, it also contributes to an increased mechanical resistance of the whole window assembly.

Further, since otherwise gaskets with increased stiffness would be required to withstand increased loads, the thicker and stiffer profiles of the gasket would not fit properly the curvature of the edge corners of the window. The heavy profiles of gasket could require often that these curved segments of the profiles have to be manufactured separately by injection and/or compression moulding processes resulting in a more complex gasket and window solution. Also these problems are avoided by the invention since the reinforcing device enables to use small and sufficiently elastic profiles even in the case of higher operational loads.

A further remarkable advantages of the window assembly of the present invention due to the reinforcing device are lower weight than with standard solution, easier assembly and maintenance of the system glazing/gasket on the vehicle's body, better fitting on the subcomponents with improvement of the water tightness of the system and less design constraint due to a lighter profile of the gasket that is more elastic and, therefore, can fit better the curvature of the glazing, improved overall mechanical strength and fatigue performances.

Preferably, the window assembly of the invention has a reinforcing device that is fixed or at least partly moveable during installing or mounting the glazing on the body. Particularly, the moveable reinforcing device allows that the window can withstand even strongly increased loads.

Preferably, the window assembly of the invention provides an opening edge face of the body that is profiled and comprises a circumferential recess between parallel walls and of the profiled edge of the body wherein the reinforcing device comprises at least one reinforcing member or more reinforcing members extending in the recess between the inside and outside parallel walls of the profiled edge of the body to ensure a strong reinforcement of the gasket and, thus, also a reinforced mounting of the glazing on the body.

The reinforcing member may occupy a substantial part of the cross section area of the body recess which is the cross section area between the inside and outside parallel walls of the profiled edge of the body to further increase the mechanical resistance of the gasket and window assembly against increased mechanical loads. The reinforcing member can occupy 40% to 100% of the cross section area of the body recess. Preferably, the reinforcing member can occupy ca. 80% of the cross section area of the body.

Preferably, the bracket of the invention is arranged or glued on the circumferential outer glazing edge face(s) or edge of the glazing for reinforcing the gasket and also the mounting of the gasket.

The window assembly of the invention can comprise an improved reinforcing device with a bracket comprising a number of fixing through holes or fixing bores which are defined by means of corresponding sockets or sleeves extending from a glass gap between parallel glass panes through fixing through holes beyond the glazing edge face or edge of the glazing into the gasket. This preferred construction allows a reinforcing of the gasket and, thus, it also contributes to an increased mechanical resistance of the whole window assembly.

Preferably, a covering portion of the bracket is arranged in corresponding equalizing recesses provided on the glazing edge face(s) or edge of the inner and outer glass panes of the glazing for equalizing a thickness of the covering portion of the bracket such that the covering portion is flush to the glazing edge face or edge in order to provide a stable seat of the bracket on the glazing.

The window assembly of the invention could have at least one reinforcing member of the reinforcing device which comprises an inner bar and an outer bar which are parallel to each other, and an intermediate portion extending between the inner and outer bars and connecting them, wherein the reinforcing member extending in a body recess of the body. These features result in a strong and stable locking of the gasket on the body or vehicle body.

Preferably, the window assembly of the invention provides at least one reinforcing member of the reinforcing device which is moveable or pivotable from a mounting position to a locked position in order to improve the mechanical resistance of the window assembly. Further, this feature allows a comfortable mounting of the reinforcing device or reinforcing member, particularly if the reinforcing member occupies a substantial part of the cross section area in the body recess between the inside and outside parallel walls of the profiled edge of the body.

A gasket inner wall portion and/or a gasket outer wall portion could be an integral portion of the gasket. The gasket inner wall portion and/or the gasket outer wall portion of the gasket can have a separate portion that is fixed on the gasket after mounting of the glazing. Preferably, the gasket inner wall portion and/or the gasket outer wall portion comprise(s) at least one moveable portion that is connected or coupled to the gasket in a hinged or folding manner, wherein, during mounting of the glazing, the moveable portion is in an opened position for allowing access to the moveable reinforcing member(s) of the reinforcing device to be able to move the moveable reinforcing member(s) from a mounting position into a locked position, and wherein, after moving the reinforcing member(s), the moveable portion is pushed into a closed position in which the access to the moveable reinforcing member(s) is closed and the moveable portion of the gasket touches the body surface.

The window assembly of the invention may provide a reinforcing device with a bracket, at least one insert or several inserts, an equalizing strip, and at least one reinforcing member or more reinforcing members mounted on the equalizing strip and extending in a body recess between parallel inner and outer walls of the profiled opening edge face of the body or vehicle body in order to obtain a further improved mechanical resistance against high loads from outside.

The window assembly of the invention can provide at least one bore or hole in the bracket, the equalizing strip and a corresponding bore or hole in a middle portion of the gasket, whereby the respective insert extends in the bore of the lining layer and in the corresponding bore of the middle portion of the gasket to ensure a secure seat of the insert and, accordingly, a corresponding reinforcement of the gasket.

The window assembly could provide a gasket that has a gasket inner wall portion or inner web, a gasket outer wall portion or outer web, and a gasket intermediate portion extending between gasket inner and outer wall portions, wherein the gasket inner wall portion extends on an inner surface of the glazing and on inner body surface of the body, the gasket outer wall portion extends on an outer surface of the glazing and on an outer body surface of the body, and wherein the gasket intermediate portion extending between the bracket and the equalizing strip of the reinforcing device in order to reinforce the gasket and to enable a strong and sufficient fixing of the reinforcing device on the gasket and at the vehicle body.

The window assembly or reinforcing device of the invention may have several inserts, pins or screws arranged along a perimeter or circumference of the gasket for improving the mechanical resistivity of the window assembly against increased mechanical loads effecting on the window assembly.

The reinforcing device could comprise several reinforcing members which can be arranged or inserted with constant or variable step along the whole perimeter or alternatively on a specific zone of the glazing and/or the body of a vehicle or building, in order to be able to adapt the window assembly to the mechanical load acting on the window, particularly in the case of an uneven distribution of the mechanical loads acting on the window.

The gasket of the invention can provide a gasket recess for accommodating and holding the glazing edge face or edge of the glazing to ensure the mounting of the glazing on the body together with the required water tightness of the window assembly.

Preferably, the window assembly of the invention provides an even gasket bottom of the gasket, wherein a flanged head of each of the inserts extending between the glazing edge face of the glazing and the gasket bottom of the gasket to ensure the mounting of the insert(s) on the gasket.

Preferably, the circumferential gasket of the window assembly of the invention comprises an inner wall portion or inner web, an outer wall portion or outer web, and a middle portion, wherein the inner wall portion extends from an inner surface of the inner pane of the glazing to an inner body surface of the body, the outer wall portion of the gasket extends from an outer surface of the outer pane of the glazing to an outer body surface of the body and wherein the middle portion extends between the gasket bottom of the gasket and the opening edge face of the body and between the outer and inner wall portions of the gasket. This gasket provides a secure watertight seat of the glazing on the body.

Further advantageous embodiments of the invention are mentioned in the dependent claims 2 to 14. Advantageous embodiments and advantages of the invention could also be derived from the following description of exemplified and preferred embodiments in connection with the following drawings showing in:
- Fig. 1: a schematic section part-view of a window assembly according to a preferred and exemplified embodiment of the invention in a locked position of a reinforcing device, seen along the auxiliary line I. of Fig. 2;
- Fig. 2: the schematic section part-view of the window assembly of Fig. 1 in a mounting position of the reinforcing device;
- Fig. 3: a schematic perspective view of the window assembly of Fig. 2 in the locked position of the reinforcing device;
- Fig. 4: a schematic section view and perspective view of the window assembly of the invention according to Figs. 1 to 3 for explaining a window gasket pre-assembly wherein a gasket is mounted on a bracket of the reinforcing device already glued on an edge face of window glass panes;
- Fig. 5: a schematic perspective view of the window assembly of the invention according to Figs. 1 to 3 explaining the mounting of a with reinforcing pins or screws of the reinforcing device on the gasket;
- Fig. 6: a schematic section view of the window assembly of the invention according to Figs. 1 to 3 explaining the moveable reinforcing members of the reinforcing device in the mounting position;
- Fig. 7: a schematic section view of the window assembly of the invention according to Figs. 1 to 3 explaining the moveable reinforcing members of the reinforcing device in their locking position;
- Fig. 8: a schematic section part-view of a window assembly according to a further embodiment of the invention with a fixed reinforcing device; and
- Fig. 9: shows a schematic and explaining view of a window assembly of the invention according to Fig. 1 or Fig. 8 seen from outside.

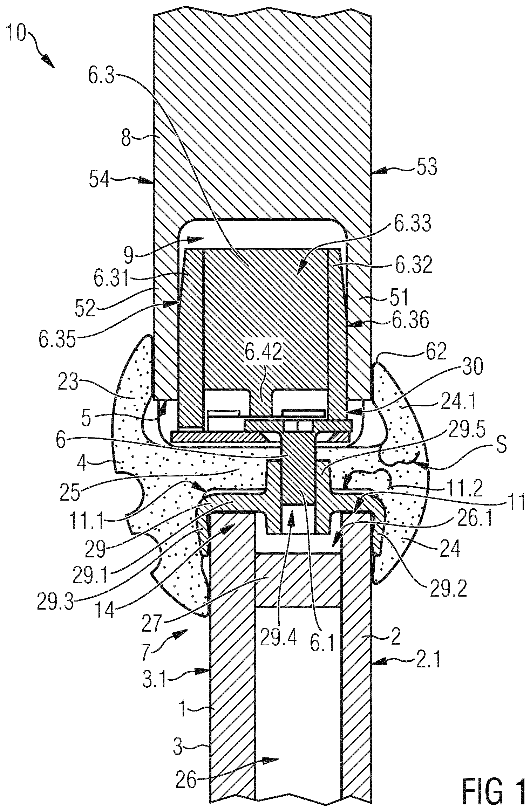

Fig. 1 shows a schematic section part-view of a window assembly 10 according to a preferred and exemplified embodiment of the invention comprising a reinforcing device 6 for a gasket 4 wherein the reinforcing device 6 is in a locked position. The window assembly 10 is shown in the assembled state with a glazing 1 mounted in a circumferential gasket 4 that extends on a circumferential opening edge face 5 of a body 8, for instance, of a vehicle or building, defining a window opening 7. The reinforcing device 6 is in a locked position. The window assembly 10 could also be used, for instance, as a side window of a high-speed passenger train.

The glazing 1 of the window assembly 10 comprises two glass panes 2, 3 arranged parallel and a circumferential glazing edge face 11 or edge faces. The glazing 1 is arranged within the window opening 7 of the body 8. The glazing 1 of the window assembly 10 may be an insulating glazing comprising, for instance, two usually transparent and parallel glass panes, an inner glass pane 2 and an outer glass pane 3. Accordingly, the glazing 1 may be a double pane insulated glazing unit (IGU) coupled to the main structural body 8 by the gasket 4. The inner and outer glass panes 2 and 3 are separated by a dehydrated gas gap 26 enclosing, for instance, air or a special inert gas. The glass panes 2 and 3 can be made of monolithic tempered glass or laminated safety glass. A circumferential insolating spacer 27 is arranged and glued in between the inner and outer glass panes 2 and 3. A remaining circumferential gap 26.1 or glazing recess is provided above the spacer 27 between the glass panes 2 and 3. The outer glass pane 3 of the glazing 1 has an outer surface 3.1 corresponding to an outer surface 3.1 of the glazing 1 which is directed to an outside or environment of the respective vehicle or building. The inner glass pane 2 of the glazing 1 has an inner surface 2.1 corresponding to an inner surface 2.1 of the glazing 1 which is directed to an inside of the respective vehicle or building.

The opening edge face 5 or edge of the body 8 is profiled and comprises a circumferential body recess 9 or holding fixture opened to the window opening 7. The recess 9 of the body 8 is defined by a circumferential inner wall 51 and a circumferential outer wall 52 extending in parallel wherein the inner wall 51 of the body 8 has an inner vehicle surface 53 directed to the inside or passenger side of the vehicle or building and the inner wall 52 of the body 8 has an inner body surface 54 directed to an outside or environmental side of the vehicle or building. The walls 51 and 52 are flush at the opening edge face 5 of the body 8.

The window assembly 10 of Fig. 1 comprises a reinforcing device 6 for reinforcing the gasket 4. The reinforcing device 6 could comprise a bracket 29, at least one insert 6.1 or several inserts 6.1, a mounting or equalizing strip 6.2 that is flat and even and that is parallel to the opening edge face 5 of the body 8 and to the glazing edge face 11 if the window assembly 10 is readily installed or mounted, and at least one moveable reinforcing member 6.3 or several moveable reinforcing members 6.3 extending in the body recess 9 of the body 8 if they are in locked position.

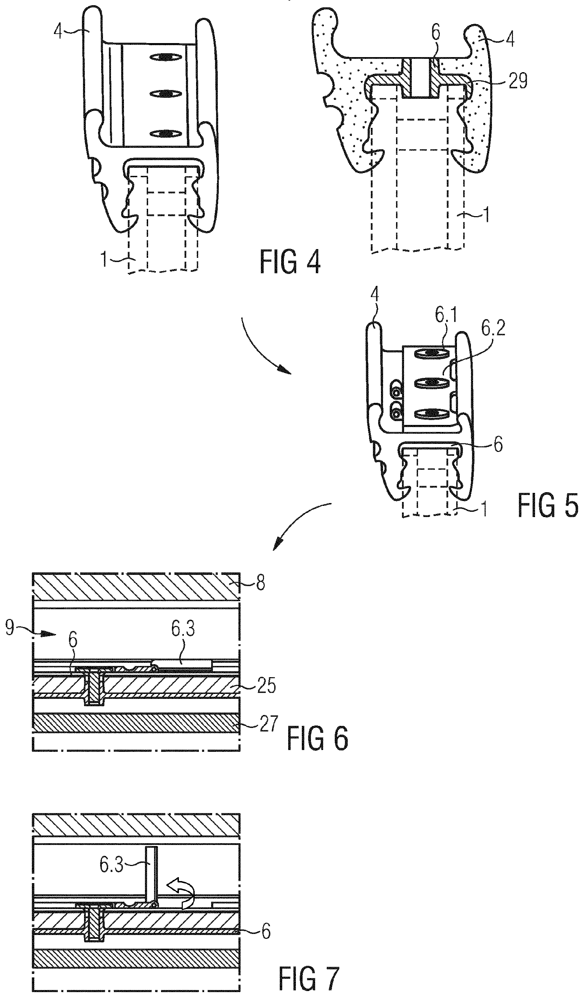

The reinforcing device could be formed circumferentially like a continuous frame comprising a circumferential bracket along the outer glazing edge face 11 of the glazing 1 or the reinforcing device may be formed in a single unit or separate units comprising one or more separated brackets 29 that are arranged with equal or unequal distance along the circumferential glazing edge face 11 of the glazing 1 or there could be a single bracket 29 arranged on the glazing edge face 11 of Fig.1 and Fig. 4.

The bracket 29 is arranged or glued on the glazing edge face 11 or edge faces of the inner and outer glass panes 2 and 3. The bracket 29 has a flat covering portion 29.1 arranged on the glazing edge face 11 and covering the circumferential gap 26.1 of the glazing 1 partly, an outside portion 29.3 extending on the outer surface 3.1 of the outer glass pane 3, and an inside portion 29.2 extending on the inner surface 2.1 of the inner glass pane 2. The inside and outside portions 29.2 and 29.3 are substantially normal to the covering portion 29.1 of the bracket 29 and they are parallel to the inner and outer surfaces 2.1 and 3.1 of the glass panes 2 and 3.

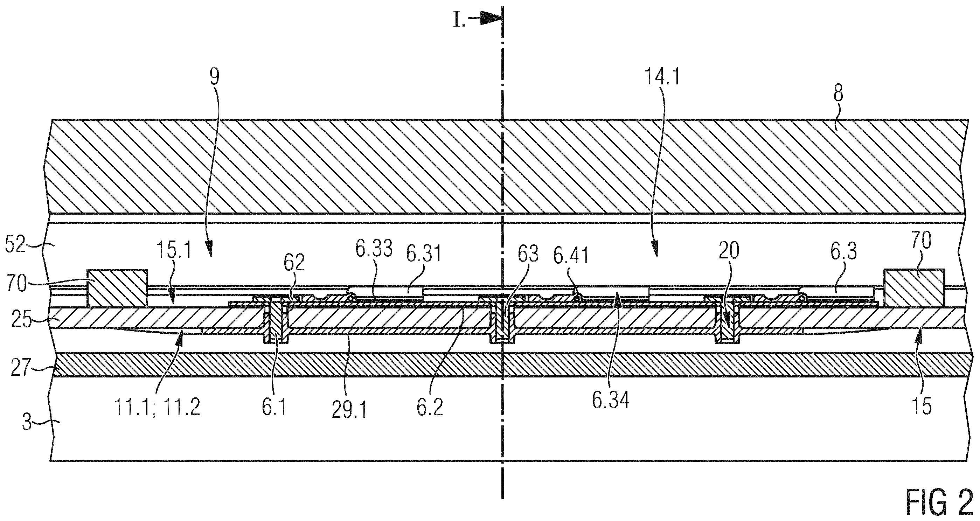

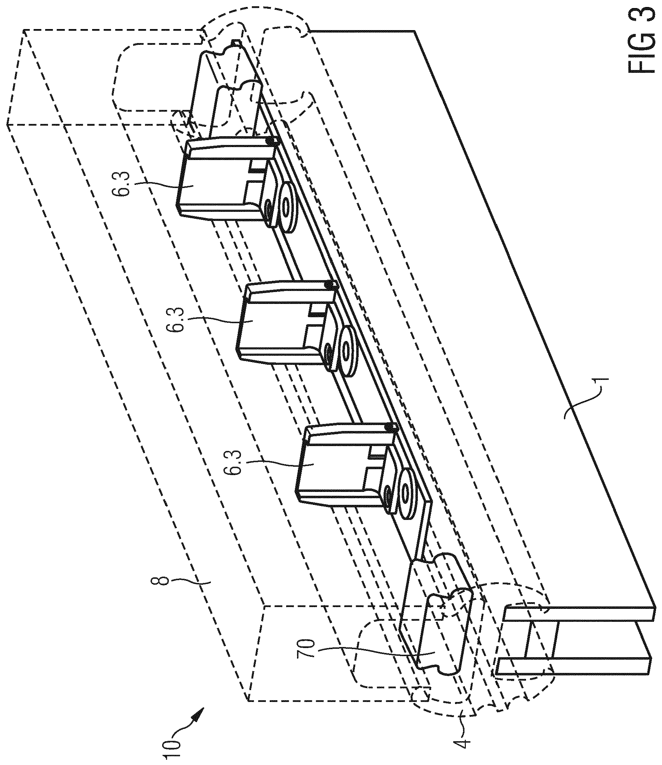

The bracket 29 comprises fixing through holes 29.4 or fixing bores which could be threaded and which are defined by means of corresponding hollow sockets 29.5 or sleeves, that could be threaded, extending from the circumferential gap 26.1 above the spacer 27 between the glass panes 2 and 3 through the fixing through holes 29.4 beyond the glazing edge face 11 of the glazing 1 into the covering portion 29.1 of the bracket 29 of the gasket 4. The sockets 29.5 and the fixing through holes 29.4 are provided normal to the covering portion 29.1. As shown in Figs. 2 and 3, the bracket 29 may comprise three fixing through holes 29.4 or fixing bores which are defined by means of corresponding three hollow sockets 29.5 or sleeves.

The covering portion 29.1 of the bracket 29 is arranged in corresponding equalizing recesses 11.1 and 11.2 provided on the glazing edge face 11 or edge faces of the glass panes 3 and 2, respectively, of the glazing 1 for equalizing a thickness of the covering portion 29.1 such that the covering portion 29.1 is flush to the remaining original glazing edge face 11. The equalizing recesses 11.1 and 11.2 could be formed by grinding/milling, 3D printing, extrusion, or molding. The bracket 29 can be formed integrally and could be made of composite materials, polymeric or plastic materials and/or preferably metallic materials, for instance, aluminum or stainless steel.

Each of the moveable reinforcing members 6.3 - as shown in Figs. 3 and 4 there may be three moveable reinforcing members 6.3 - comprises an outer bar 6.31 and an inner bar 6.32 which are parallel to each other, and a flat intermediate member 6.33 extending between the outer and inner bars 6.31 and 6.32 and connecting them. The outer bar 6.31 has a bar outside 6.35 and the inner bar 6.32 has a bar outside 6.36 being tapered towards the intermediate member 6.33 at their free ends 6.34. The outer bar 6.31 has a hinged end 6.39 which is coupled to an additional flat member 6.40 which is screwed on the equalizing strip 6.2. The flat member 6.40 comprises a hinge socket 6.41 to be coupled to the hinged end 6.39 or a hinge pin of the hinged end 6.39 of the outer bar 6.31. Each intermediate member 6.33 comprises a stop 6.42 that stops at the corresponding flat member 6.40 if the corresponding moveable reinforcing member 6.3 is in the locked position. The stop 6.42 supports and locks the intermediate member 6.33 on the flat member 6.40.

The moveable reinforcing members 6.3 are made of composite materials, polymeric or plastic materials, and/or preferably metallic materials, for instance, aluminium or stainless steel.

The hinge socket 6.41 and the hinged end 6.39 or pin resulting in a hinge allow that the moveable reinforcing member(s) 6.3 can be moved or can pivot from a mounting or horizontal position, in which the moveable reinforcing member 6.3 is arranged parallel to the equalizing strip 6.2, to an upright or vertical position in which the moveable reinforcing member 6.3 is normal to the equalizing strip 6.2 in the locked position. As shown in Fig. 1, after moving the moveable reinforcing member 6.3 from the horizontal mounting position to the locked position, the bar outside 6.35 of the outer bar 6.31 touches the outer wall 52 of the profiled body 8 whereas the bar outside 6.36 of the inner bar 6.32 of the moveable reinforcing member 6.3 touches the inner wall 51 of the profiled body 8. Accordingly, the moveable reinforcing member 6.3 supports the walls 51 and 52 within the body recess 9 of the profiled body 8. A distance between the walls 51 and 52 within the body recess 9 corresponds, therefore, substantially to a distance between the bar outsides 6.35 and 6.36 of the moveable reinforcing member 6.3 for reinforcing the gasket 4 in the locked position of the moveable reinforcing member 6.3. The reinforcing members 6.3 in the locked position allow that the gasket 4 is able to withstand substantially increased static and dynamic loads and forces on the window assembly 10 or window.

The moveable reinforcing member 6.3 in locking position may occupy a substantial part of the cross section area of the body recess 9 which is the cross section area between the inside and outside parallel walls 51, 52 of the profiled edge of the body 8. The reinforcing member 6.3 can occupy ca. 80% of the cross section area of the body 8.

The window assembly 10 provides several structural elements or inserts 6.1 of the in the form of rotational symmetrical pins or screws for reinforcing the gasket 4, wherein the inserts 6.1 extend substantially in the gasket 4. Three inserts 6.1 are shown in Fig. 2. Each insert 6.1 comprises a flanged head 62 and a cylindrical portion 63 extending from the flanged head 62 into the corresponding socket 29.5 of the bracket 29 in order to fix the insert 6.1 in the socket 29.5. The inserts 6.1 are made of composite materials, polymeric or plastic materials and/or preferably metallic materials, for instance, aluminum or stainless steel.

The window assembly 10 of Fig. 1 comprises the circumferential frame like structural gasket 4 provided between the glazing 1 and the opening edge face 5 of the body 8. The gasket 4 couples or connects the glazing 1 to the body 8 and it holds the glazing 1 within the window opening 7 on the body 8 by holding the opening edge face 5 or edge of the body 8 and the outer glazing edge face 11 or edge of the glazing 1.

The structural gasket 4 is a separate element made by a compression moulding process using polymeric extruded material. The structural gasket 4 is duly fitted to the glazing 1 and to the body 8. The gasket 4 comprises structural elastic properties in order to withstand defined static and dynamic loads on the window assembly 10 or window caused by the operating conditions like, for instance, aerodynamic uniformly distributed pressures up to 3kPa, inertial forces due to acceleration or impacts/crashes up to 5g, human loads and different combination of the mentioned actions in the spatial directions.

The other function of the circumferential structural gasket 4 is to guarantee water tightness of the window assembly 10 in the operational conditions and last but not least a mandatory requirement is the fire/smoke opacity and toxicity compliance, for instance, according to EN 45545.

The circumferential frame like structural gasket 4 of the window assembly 10 comprises a circumferential recess 14 for holding the glazing 1 wherein the glazing edge face 11 or edge of the glazing 1 extends within the recess 14 of the gasket 4. The recess 14 of the gasket 4 provides a circumferential bottom 15 that is opposed to the circumferential glazing edge face 11 of the glazing 1. The covering portion 29.1 of the bracket 29 extends between the bottom 15 of the recess 14 of the gasket 4 and the glazing edge face 11 of the glazing 1.

Further, the circumferential peripheral gasket 4 of the window assembly 10 according to the invention shown in Fig. 1 comprises a circumferential gasket outer wall portion 23 or outer web, a circumferential gasket inner wall portion 24 or inner web, and a circumferential flat gasket intermediate portion 25. The gasket outer wall portion 23 extends from the outer surface 3.1 of the outer glass pane 3 of the insulating glazing 1 to the outer surface 54 of the body 8 and it presses against these surfaces 3.1 and 54. The gasket inner wall portion 24 of the gasket 4 extends between the inner surface 2.1 of the inner glass pane 2 of the insulating glazing 1 to the inner body surface 53 of the body 8 and it presses against these surfaces 2.1 and 53.

The gasket inner wall portion 24 or inner web can be an integral portion of the gasket 4. In alternative, the gasket inner wall portion 24 could comprise a separate portion that is fixed to the gasket 4 after mounting of the glazing 1. In further alternative, the gasket inner wall portion 24 could comprise at least one moveable portion 24.1 that is connected or coupled to the gasket 4 in a hinged or folding manner. During mounting of the glazing 1, the moveable portion 24.1 is in an opened position for allowing access to the moveable reinforcing member(s) 6.3 of the reinforcing device 6 to be able to move the moveable reinforcing member(s) 6.3 from a mounting position into a locking position. After moving the reinforcing member(s) 6.3, the moveable portion 24.1 is pushed into a closed position in which the access to the moveable reinforcing member(s) is closed and the moveable portion 24.1 of the gasket 4 touches the inner body surface 53 of the inner wall 51. The moveable portion 24.1 is indicated by a schematic separating auxiliary line s shown in Fig. 1 with the moveable portion 24.1 in its closed position after mounting of the glazing 1.

The gasket intermediate portion 25 extends between the covering portion 29.1 of the bracket 29 and the equalizing strip 6.2 of the reinforcing device 6.

The gasket 4 has a number of through holes 20 or bores corresponding to the number of inserts 6.1 or pins. Each of the through holes 20 is provided in the gasket intermediate portion 25 between a bottom 15 of a recess 14 directed to the glazing 1 and a further bottom 15.1 of a further recess 14.1 of the gasket 4 which is directed to the body 8. The hollow sockets 29.5 of the bracket 29 extend within the through holes 20 of the gasket intermediate portion 25.

Fig. 4 shows schematic views of the window assembly 10 of the invention according to Figs. 1 to 3 for explaining a window gasket pre-assembly wherein the gasket 4 is mounted on the bracket 29 of the reinforcing device 6. Accordingly, after preparing or grinding the equalizing recesses 11.1 and 11.2 on the glazing edge face 11 or edge faces of the glass panes 2 and 3 of the glazing 1, the bracket 29 of the reinforcing device 6 is glued on the glazing edge face 11 within the inner and outer equalizing recesses 11.1 and 11.2 such that the covering portion 29.1 of the bracket 29 is flush to the remaining not grinded original glazing edge face 11. Afterwards, the gasket 4 is arranged on the glazing edge face 11 and on the bracket 29 within the of the equalizing recesses 11.1 and 11.2 of the glazing 1 wherein the bottom 15 of the gasket 4 within the gasket recess 14 lies on the glazing edge face 11 and above the covering portion 29.1 of the bracket 29. Accordingly, the gasket outer wall portion 23 touches the outer surface 3.1 of the outer glass pane 3 and the gasket inner wall portion 24 of the bracket 29 touches the inner surface 2.1 of the inner glass pane 2. The hollow sockets 29.5 extend within the through holes 20 of the bracket 29. As shown in Figs. 2 and 3, setting blocks 70 could be used on the further bottom 15.1 of the gasket 4 as auxiliary tools for proper positioning of the glazing 1 during the installation phase.

Fig. 5 shows a schematic view of the window assembly 10 of the invention according to Figs. 1 to 3 explaining the mounting of a liner or equalizing strip 6.2 of the reinforcing device 6 with screws as inserts 6.1 of the reinforcing device 6 on the bottom 15.1 of the recess 14.1 of the gasket 4. The equalizing strip 6.2, then, is arranged on the bottom 15.1 of the gasket 4 within its recess 14.1. The inserts 6.1 are then screwed into the hollow screw sockets 29.5 of the bracket 29 of the reinforcing device 6 until the inserts 6.1 or screws are tightened completely to fasten the equalizing strip 6.2 on the covering portion 29.3 of the bracket 29 with holding and clamping the gasket intermediate portion 25 between the equalizing strip 6.2 and the covering portion 29.3 of the bracket 29 fixedly.

Fig. 6 shows a schematic section view of the window assembly 10 of the invention according to Figs. 1 to 3 showing the moveable reinforcing members 6.3 of the reinforcing device 6 in the mounting position. The flat members 6.40 together with the corresponding moveable reinforcing members 6.3 hinged thereto are then screwed on the equalizing strip 6.2. Accordingly, the moveable reinforcement members are arranged in the mounting position in which they lie on top of the moveable reinforcing members 6.3. The glazing 1 with gasket 4 and reinforcing device 6 in mounting position thereon is then mounted on the body 8 within the window opening 7 whereby the opening edge face 5 or edge of the body 8 engages into the gasket recess 14.1.

Fig. 7 shows a schematic section view of the window assembly 10 of the invention according to Figs. 1 to 3 explaining the moveable reinforcing members 6.3 of the reinforcing device 6 in their locking position. Mounting of the glazing 1 with gasket 4 is performed from outside of the body 8. During mounting the glazing 1 with gasket 4 on the body 8 and before the gasket outer wall portion 23 touches the outer body surface 54 or the gasket inner wall portion 24 touches the inner body surface 53 or the opening edge face 5 or edge of the body 8, there occurs an adjustment opening 30 or access that allows to move the moveable reinforcing member(s) 6.3 of the reinforcing device 6 from the mounting position into the locking position in which the reinforcing members 6.3 are normal to the equalizing strip 6.2 and to the gasket intermediate portion 25. A pin like tool, for example, could be used to cause the movement or pivoting of the moveable reinforcing member(s) 6.3 into their locking position through the adjustment opening 30. Afterwards, the adjustment opening 30 or access can be closed by moving the moveable portion 24.1 of the gasket inner wall portion 24 from its opened position into its closed position in which the adjustment opening 30 or access to the moveable reinforcing member(s) 6.3 is closed and the moveable portion 24.1 of the gasket 4 touches the inner body surface 53 of the inner wall 51.

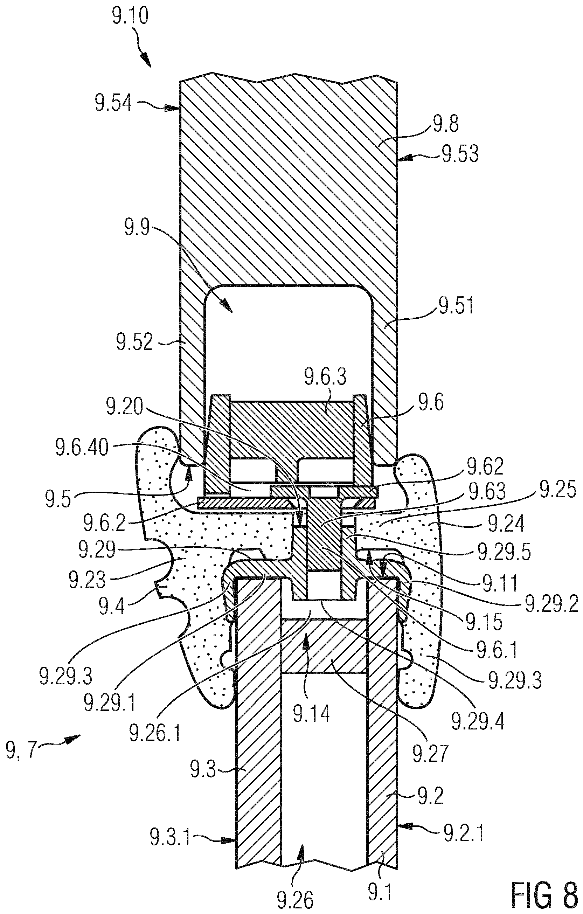

Fig. 8 shows a schematic section part-view of a window assembly 9.10 according to a further exemplified embodiment of the invention with a fixed reinforcing device 9.6 for a gasket 9.4 wherein the reinforcing device 9.6 is in a fixed upright locking position. The window assembly 9.10 is shown in the assembled state with a glazing 9.1 mounted in the circumferential gasket 9.4 that extends on a circumferential opening edge face 9.5 of a body 8 or body defining a window opening 9.7. The window assembly 9.10 could be used, for instance, in a vehicle or a building or in a side window of a high-speed passenger train.

The glazing 9.1 of the window assembly 9.10 comprises two glass panes 9.2, 9.3 arranged parallel and a circumferential outer glazing edge face 9.11 or edge faces. The glazing 9.1 is arranged within the window opening 9.7 of the body 9.8. The glazing 9.1 of the window assembly 9.10 may be an insulating glazing. The inner and outer glass panes 9.2 and 9.3 are separated by a dehydrated gas gap 9.26 enclosing, for instance, air or a special inert gas. A circumferential insolating spacer 9.27 is arranged and glued in between the glass panes 9.2 and 9.3. A remaining gap 9.26.1 or glazing recess is provided above the spacer 9.27. The inner glass pane 9.2 of the glazing 9.1 has an inner surface 9.2.1 which is directed to an inside of the corresponding vehicle or building. The outer glass pane 9.3 has an outer surface 9.3.1 which is directed to an outside or environment of the respective vehicle or building.

The opening edge face 9.5 or edge of the body 9.8 is profiled and comprises a circumferential body recess 9.9 or holding fixture opened to the window opening 9.7. The recess 9.9 is defined by a circumferential inner wall 9.51 and a circumferential outer wall 9.52 extending in parallel wherein the outer wall 9.52 of the body 9.8 has an outer body surface 9.54 directed to the outside or environmental side of the vehicle or building and the inner wall 9.51 of the body 9.8 has an inner body surface 9.53 directed to an inside or passenger side of the vehicle or building. The walls 9.51 and 9.52 are flush to the opening edge face 9.5 of the body 8.

The reinforcing device 9.6 could comprise a bracket 9.29, at least one insert 9.6.1 or several inserts 9.6.1, a mounting or equalizing strip 9.6.2 that is flat and even and that is parallel to the opening edge face 9.5 of the body 8 and to the glazing edge face 9.11 if the window assembly 9.10 is readily installed or mounted, and at least one locking, fixed and unmoveable reinforcing member 9.6.3 or several fixed unmoveable reinforcing members 9.6.3 extending in the body recess 9.9 of the body 9.8.

The reinforcing device 9.6 could be formed circumferentially like a continuous frame comprising a circumferential bracket along the outer glazing edge face 9.11 of the glazing 9.1 or the reinforcing device 9.6 may be formed in a single unit or separate units comprising one or more separated brackets 9.29 that are arranged with equal or unequal distance along the circumferential glazing edge face 9.11 of the glazing 9.1 or there could be the single bracket 9.29 arranged on the glazing edge face 9.11 of Fig. 8.

The bracket 9.29 is arranged or glued on the glazing edge face 9.11 or edge faces of the glass panes 9.2 and 9.3. The bracket 9.29 has a flat covering portion 9.29.1 arranged on the glazing edge face 9.11 and covering the circumferential gap 9.26.1 of the glazing 9.1 partly, an inside portion 9.29.2 extending on the inner surface 9.2.1 and an outside portion 9.29.3 extending on the outside surface 9.3.1. The inside and outside portions 9.29.2 and 9.29.3 are substantially normal to the covering portion 9.29.1 of the bracket 9.29 and they are parallel to the inner and outer surfaces 9.2.1 and 9.3.1.

The bracket 9.29 comprises fixing through holes 9.29.4 or fixing bores which are defined by means of corresponding hollow sockets 9.29.5. The sockets 9.29.5 and the fixing through holes 9.29.4 are provided normal to the covering portion 9.29.1. The bracket 9.29 may comprise three fixing through holes 9.29.4 or fixing bores which are defined by means of corresponding three hollow sockets 9.29.5 or sleeves. The bracket 9.29 can be formed integrally and could be made of composite materials, polymeric or plastic materials and/or preferably metallic materials, for instance, aluminum or stainless steel.

The fixed reinforcing member 9.6.3 could be coupled to an additional flat member 9.6.40 which may be screwed on the equalizing strip 9.6.2 or may be mounted in upright manner on the equalizing strip 9.6.2. As shown in Fig. 8, the reinforcing member 9.6.3 touches the inner wall 9.51 and the outer wall 9.52 within the body recess 9.9 of the profiled body 8. The at least one fixed reinforcing member 9.6.3 in the upright locking position allow that the gasket 9.4 is able to withstand substantially increased static and dynamic loads and forces on the window assembly 9.10 or window.

The fixed reinforcing member 9.6.3 may occupy a part of the cross section area of the body recess 9.9 which is the cross section area between the inside and outside parallel walls 9.51, 9.52 of the profiled edge of the body 8. The reinforcing member 9.6.3 can occupy less than ca. 50% of the cross section area of the body recess 9.9. In Fig. 8, the reinforcing member 9.6.3 occupies ca. 40% of the cross section area of the body recess 9.9.

The window assembly 9.10 provides several structural elements or inserts 9.6.1 in the form of rotational symmetrical pins or screws for reinforcing the gasket 9.4, wherein the inserts 9.6.1 extend substantially in the gasket 9.4. The insert 9.6.1 comprises a flanged head 9.62 and a cylindrical portion 9.63 extending from the flanged head 9.62 into the corresponding socket 9.29.5 of the bracket 9.29 in order to fix the insert 9.6.1 or screw in the socket 9.29.5. The at least one insert 9.6.1 is made of composite materials, polymeric or plastic materials and/or preferably metallic materials, for instance, aluminum or stainless steel.

The window assembly 9.10 of Fig. 8 comprises the circumferential frame like structural gasket 9.4 provided between the glazing 9.1 and the opening edge face 9.5 of the body 8. The gasket 9.4 couples or connects the glazing 9.1 to the body 9.8 and it holds the glazing 9.1 within the window opening 9.7 on the body 9.8 by holding the opening edge face 9.5 or edge of the body 8 and the glazing edge face 9.11 or edge of the glazing 9.1.

The circumferential frame like structural gasket 9.4 of the window assembly 9.10 comprises a circumferential recess 9.14 for accommodating and holding the corresponding glazing edge face 9.11 or edge of the glazing 9.1. The recess 9.14 of the gasket 9.4 provides a circumferential bottom 9.15 that is opposed to the circumferential glazing edge face 9.11 of the glazing 9.1. The covering portion 9.29.1 of the bracket 9.29 extends between the bottom 9.15 of the recess 9.14 of the gasket 9.4 and the glazing edge face 9.11.

Further, the peripheral gasket 9.4 of Fig. 8 comprises a circumferential gasket inner wall portion 9.24 or inner web, a circumferential gasket outer wall portion 9.23 or outer web, and a circumferential gasket intermediate portion 9.25. The gasket inner wall portion 9.24 extends from the inner surface 9.2.1 of the glazing 9.1 to the inner surface 9.53 of the body 9.8 and it presses against these surfaces 9.2.1 and 9.53. The gasket outer wall portion 9.23 of the gasket 9.4 extends from the outer surface 9.3.1 of the insulating glazing 9.1 to the outer body surface 9.54 of the body 9.8 and it presses against these surfaces 9.3.1 and 9.54. The gasket intermediate portion 9.25 extends between the covering portion 9.29.1 of the bracket 9.29 and the equalizing strip 9.6.2 of the reinforcing device 9.6.

The gasket 9.4 has at least one through hole 9.20 or bore corresponding to the least one insert 9.6.1 or pin. The hollow socket 9.29.5 of the bracket 9.29 extends within the through hole 9.20 of the gasket intermediate portion 9.25.

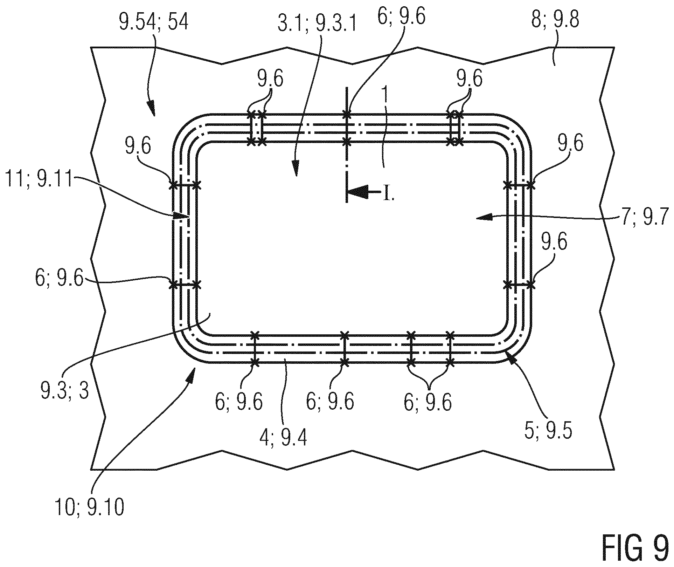

Fig. 9 shows a schematic and explaining view of a window assembly 10 or 9.10 of Fig. 1 or Fig. 8 seen from outside which is installed in the body 8 or 9.8 of, for instance, a vehicle like a train. A number of reinforcing devices 6 and/or 9.6 or structural elements may be inserted with constant distance or step between each two neighboured reinforcing devices 6 and/or 9.6 as explained and shown in Fig. 9 on left and right sides of a perimeter or circumference of the window assembly 10 or 9.10. Further, reinforcing devices 6 and/or 9.6 may also be arranged with variable distance or step as explained and shown in Fig. 9 on, for instance, a lower side of the window assembly 10 or 9.10. As shown and explained in Fig. 9, additional reinforcing devices 6 and/or 9.6 may be grouped in a specific zone of the perimeter of the window assembly or glazing on, for instance, an upper side of the window assembly 10 or 9.10.

## Claims

1. Window assembly (10; 9.10) for a vehicle or building, particularly for a high-speed passenger-train, comprising
a glazing (1; 9.1) that has one or more panes (2, 3; 9.2, 9.3) made of glass, plastic, and/or ceramic material,
a window opening (7; 9.7) provided in a body (8; 9.8),
a frame like gasket (4; 9.4) provided between the glazing (1; 9.1) and the body (8; 9.8) and holding the glazing (1; 9.1) on the body (8; 9.8) within the window opening (7; 9.7), and
a reinforcing device (6; 9.6) for reinforcing the gasket (4, 9.4), **characterized in**
**that** the reinforcing device (6; 9.6) comprises a bracket (29; 9.29), at least one insert (6.1; 9.6.1) or several inserts (6.1; 9.6.1), and an equalizing strip (6.2; 9.6.2) and
**that** the gasket (4; 9.4) comprises a gasket intermediate portion (25; 9.25) arranged between the bracket (29, 9.25) and the equalizing strip (6.2; 9.6.2), the insert(s) (6.1; 9.6.1) coupling the bracket (29; 9.29) to the equalizing strip (6.2; 9.6.2).

2. Window assembly (10; 9.10) according to claim 1,
**characterized in that**:
the glazing (1; 9.11) comprises a glazing edge face (11; 9.11) or edge;
the body (8; 9.8) comprises an opening edge face (5; 9.5) defining the window opening (7; 9.7) provided in the body (8; 9.8);
the gasket (4; 9.4) holds the glazing (1; 9.1) on the body (8; 9.8) by receiving the opening edge face (5; 5.9) or edge of the body (8; 8.9) and the glazing edge face (11, 9.11) or edge of the glazing (1; 9.1).

3. Window assembly (10; 9.10) according to claim 1 or claim 2, **characterized in that** the reinforcing device (6; 9.6) comprises at least one insert (6.1; 9.6.1) arranged along a perimeter or circumference of the gasket (4; 9.4) for reinforcing the gasket (4; 9.4).

4. Window assembly (10; 9.10) according to one of the preceding claims, **characterized in that** the reinforcing device is fixed (9.6) or at least partly moveable (6) during installing or mounting the glazing (1; 9.1) on the body (8, 9.8).

5. Window assembly (10; 9.10) according to one of the preceding claims, **characterized in that** the opening edge face (5, 9.5) of the body (8; 8.9) is profiled and comprises a circumferential recess (9; 9.9) between parallel walls (51; 9.51) and (52; 9.52) of the profiled edge of the body (8; 9.8); and
that the reinforcing device (6; 9.6) comprises at least one reinforcing member (6.3; 9.6.3) or more reinforcing members (6.3; 9.6.3) extending in the recess (9; 9.9) between the inside and outside parallel walls (51; 9.51) and (52; 9.52) of the profiled edge of the body (8; 9.8).

6. Window assembly (10, 9.10) according to one of the preceding claims, **characterized in that** the bracket (29; 9.29) is arranged or glued on a circumferential outer glazing edge face (11; 9.11) or edge of the glazing (1; 9.1).

7. Window assembly (10; 9.10) according to one of the preceding claims, **characterized in that** the bracket (29) has a covering portion (29.1; 9.29.1) covering the circumferential outer glazing edge face (11; 9.11) or edge, an inside portion (29.2; 9.29.2) extending on the inner surface (2.1; 9.2.1) of the glazing (1; 9.1), and an outside portion (29.3; 9.29.3) extending on an outer surface (3.1; 9.3.1) of the glazing (1; 9.1), wherein the inside and outside portions (29.2; 9.29.2) and (29.3; 9.29.3) are substantially normal to the covering portion (29.1; 9.29.1) of the bracket (29; 9.29) and parallel to the inner and outer surfaces (2.1, 3.1; 9.2.1, 9.3.1), the covering portion (29.1; 9.29.1) extending between the inside and outside portions (29.2; 9.29.2) and (29.3; 9.29.3) of the gasket (4; 4.9).

8. Window assembly (10) according to one of the preceding claims, **characterized in that** the bracket (29) comprises a number of fixing through holes (29.4) or fixing bores which are defined by means of corresponding sockets (29.5) or sleeves extending from a glass gap (26) between parallel glass panes (2, 3) through the fixing through holes (29.4) beyond the glazing edge face (11) or edge of the glazing (1) into the gasket (4).

9. Window assembly (10) according to one of the preceding claims, **characterized in that** the covering portion (29.1) of the bracket (29) is arranged in corresponding equalizing recesses (11.1 and 11.2) provided on the glazing edge face (11) or edge of the inner and outer glass panes (2 and 3) of the glazing (1) for equalizing a thickness of the covering portion (29.1) of the bracket (29) such that the covering portion (29.1) is flush to the glazing edge face (11) or edge.

10. Window assembly (10; 9.10) according to one of the preceding claims, **characterized in that** at least one reinforcing member (6.3; 9.6.3) of the reinforcing device (6; 9.6) comprises an outer bar (6.31; 9.6.31) and an inner bar (6.32; 9.6.32 ) which are parallel to each other, and an intermediate portion (6.33; 9.6.33) extending between the outer and inner bars (6.31, 6.32; 9.6.31, 9.6.32) and connecting them, the reinforcing member(s) (6.3; 9.6.3)) extending in a body recess (9; 9.9) of the body (8; 9.8).

11. Window assembly (10) according to one of the preceding claims, **characterized in that** at least one reinforcing member (6.3) of the reinforcing device (6) is moveable or pivot able from a mounting position to a locked position.

12. Window assembly (10; 9.10) according to one of the preceding claims, **characterized in**
**that** an gasket inner wall portion (24; 9.24) and/or a gasket outer wall portion (23; 9.23) is an integral portion of the gasket (4; 9.4); or
**that** the gasket inner wall portion and/or the gasket outer wall portion have a separate portion that is fixed to the gasket after mounting of the glazing; or
**that** the gasket inner wall portion (24) and/or the gasket outer wall portion comprise(s) at least one moveable portion (24.1) that is connected or coupled to the gasket (4) in a hinged or folding manner, wherein, during mounting of the glazing 1, the moveable portion (24.1) is in an opened position for allowing access to a moveable reinforcing member(s) (6.3) of the reinforcing device (6) to be able to move the moveable reinforcing member(s) (6.3) from a mounting position into a locked position, and wherein, after moving the reinforcing member(s) (6.3), the moveable portion (24.1) is pushed into a closed position in which the access to the moveable reinforcing member(s) (6.3) is closed and the moveable portion (24.1) of the gasket (4) touches the body surface (53; 54).

13. Window assembly (10; 9.10) according to one of the preceding claims, **characterized in that** the reinforcing device (6; 9.6) comprises a bracket (29; 9.29), at least one insert (6.1; 9.6.1) or several inserts (6.1; 9.6.1), an equalizing strip (6.2; 9.6.2), and at least one reinforcing member (6.3; 9.6.3) or more reinforcing members (6.3; 9.6.3) mounted on the equalizing strip (6.2; 9.6.2) and extending in a body recess (9; 9.9) between parallel inner and outer walls (51, 52) of the profiled opening edge face (11; 9.11) or faces of the body (8; 9.8).

14. Window assembly (10; 9.10) according to claim 13, **characterized in that** the gasket (4; 9.4) comprises a gasket inner wall portion (24; 9.24) or inner web, a gasket outer wall portion (23; 9.23) or outer web, and a gasket intermediate portion (25; 9.25) extending between gasket outer and inner wall portions (23, 24),
wherein the gasket inner wall portion (24; 9.24) extends on an inner surface (2.1; 9.2.1) of the glazing (1; 9.1) and on inner body surface (53; 9.53) of the body (8; 9.8), the gasket outer wall portion (23; 9.23) extends on an outer surface (3.1; 9.3.1) of the glazing (1; 9.1) and on an outer body surface (54; 9.54) of the body (8; 9.8),
wherein the gasket intermediate portion (25; 9.25) extending between the bracket (29; 9.29) and the equalizing strip (6.2; 9.6.2) of the reinforcing device (6; 9.6).

## Patentansprüche

1. Fensteranordnung (10; 9.10) für ein Fahrzeug oder ein Gebäude, insbesondere für einen Hochgeschwindigkeitszug, die aufweist
eine Verglasung (1; 9.1) mit einer Scheibe oder mehreren Scheiben (2, 3; 9.2, 9.3) aus Glas, Kunststoff und/oder Keramik,
eine Fensteröffnung (7; 9.7) in einem Aufbau (8; 9.8),
eine rahmenartige Dichtung (4; 9.4) zwischen der Verglasung (1; 9.1) und dem Aufbau (8; 9.8), die die Verglasung (1; 9.1) an dem Aufbau (8; 9.8) innerhalb der Fensteröffnung (7; 9.7) hält, und
eine Verstärkungsvorrichtung (6; 9.6) zum Verstärken der Dichtung (4, 9.4), **dadurch gekennzeichnet,**
**dass** die Verstärkungsvorrichtung (6; 9.6) eine Halterung (29; 9.29), mindestens einen Einsatz (6.1; 9.6.1) oder mehrere Einsätze (6.1; 9.6.1) und eine Ausgleichsleiste (6.2; 9.6.2) aufweist und
**dass** die Dichtung (4; 9.4) einen Dichtungszwischenabschnitt (25; 9.25) aufweist, der zwischen der Halterung (29; 9.25) und der Ausgleichsleiste (6.2; 9.6.2) angeordnet ist, wobei der Einsatz oder die Einsätze (6.1; 9.6.1) die Halterung (29; 9.29) mit der Ausgleichsleiste (6.2; 9.6.2) koppelt bzw. koppeln.

2. Fensteranordnung (10; 9.10) nach Anspruch 1, **dadurch gekennzeichnet, dass**:
die Verglasung (1; 9.11) eine Verglasungsrandseite (11; 9.11) oder einen Rand der Verglasung aufweist;
der Aufbau (8; 9.8) eine Öffnungsrandseite (5; 9.5) hat, die die in dem Aufbau (8; 9.8) vorgesehene Fensteröffnung (7; 9.7) begrenzt,
wobei die Dichtung (4; 9.4) die Verglasung (1; 9.1) an dem Aufbau (8; 9.8) hält, indem sie die Öffnungsrandseite (5; 5.9) oder den Rand des Aufbaus (8; 8.9) und die Verglasungsrandseite (11, 9.11) oder den Rand der Verglasung (1; 9.1) aufnimmt.

3. Fensteranordnung (10; 9.10) nach Anspruch 1 oder Anspruch 2, **dadurch gekennzeichnet, dass** die Verstärkungsvorrichtung (6; 9.6) mindestens einen Einsatz (6.1; 9.6.1) aufweist, der entlang einer Umgrenzung oder eines Umfangs der Dichtung (4; 9.4) angeordnet ist und die Dichtung (4; 9.4) verstärkt.

4. Fensteranordnung (10; 9.10) nach einem der vorhergehenden Ansprüche, **dadurch gekennzeichnet, dass** die Verstärkungsvorrichtung während des Einbaus oder der Montage der Verglasung (1; 9.1) an dem Aufbau (8; 9.8) fest (9.6) oder zumindest teilweise beweglich (6) ist.

5. Fensteranordnung (10; 9.10) nach einem der vorhergehenden Ansprüche, **dadurch gekennzeichnet, dass** die Öffnungsrandseite (5; 9.5) des Aufbaus (8; 8.9) profiliert ist und eine umlaufende Aussparung (9; 9.9) zwischen parallelen Wänden (51; 9.51) und (52; 9.52) des profilierten Rands des Aufbaus (8; 9.8) aufweist; und dass die Verstärkungsvorrichtung (6; 9.6) mindestens ein Verstärkungselement (6.3; 9.6.3) oder mehrere Verstärkungselemente (6.3; 9.6.3) aufweist, die sich in der Aussparung (9; 9.9) zwischen den parallelen Innen- und Außenwänden (51; 9.51) und (52; 9.52) des profilierten Rands des Aufbaus (8; 9.8) erstrecken.

6. Fensteranordnung (10; 9.10) nach einem der vorhergehenden Ansprüche, **dadurch gekennzeichnet, dass** die Halterung (29; 9.29) an einer umlaufenden äußeren Verglasungsrandseite (11; 9.11) oder an einem Rand der Verglasung (1; 9.1) angeordnet oder aufgeklebt ist.

7. Fensteranordnung (10; 9.10) nach einem der vorhergehenden Ansprüche, **dadurch gekennzeichnet, dass** die Halterung (29) einen Abdeckabschnitt (29.1; 9.29.1), der die umlaufende äußere Verglasungsrandseite (11; 9.11) oder den Verglasungsrand abdeckt, einen Innenabschnitt (29.2; 9.29.2), der sich auf einer Innenfläche (2.1; 9.2.1) der Verglasung (1; 9.1) erstreckt, und einen Außenabschnitt (29.3; 9.29.3) aufweist, der sich auf einer Außenfläche (3.1; 9.3.1) der Verglasung (1; 9.1) erstreckt, wobei sich die Innen- und Außenabschnitte (29.2; 9.29.2) und (29.3; 9.29.3) im Wesentlichen normal zum Abdeckabschnitt (29.1; 9.29.1) der Halterung (29; 9.29) und parallel zu den Innen- und Außenflächen (2.1, 3.1; 9.2.1, 9.3.1) erstrecken und wobei sich der Abdeckabschnitt (29.1; 9.29.1) zwischen den Innen- und Außenabschnitten (29.2; 9.29.2) und (29.3; 9.29.3) der Dichtung (4; 4.9) erstreckt.

8. Fensteranordnung (10) nach einem der vorhergehenden Ansprüche, **dadurch gekennzeichnet, dass** die Halterung (29) eine Anzahl von Befestigungsdurchgangslöchern (29.4) oder Befestigungsbohrungen aufweist, die durch entsprechende Buchsen (29.5) oder Hülsen begrenzt sind, die sich von einem Glasspalt (26) zwischen parallelen Glasscheiben (2, 3) durch die Befestigungsdurchgangslöcher (29.4) über die Verglasungsrandseite (11) oder den Rand der Verglasung (1) hinaus in die Dichtung (4) erstrecken.

9. Fensteranordnung (10) nach einem der vorhergehenden Ansprüche, **dadurch gekennzeichnet, dass** der Abdeckabschnitt (29.1) der Halterung (29) in entsprechenden Ausgleichsaussparungen (11.1 und 11.2) an der Verglasungsrandseite (11) oder dem Rand der inneren und äußeren Glasscheiben (2 und 3) der Verglasung (1) angeordnet ist, um eine Dicke des Abdeckabschnitts (29.1) der Halterung (29) so auszugleichen, dass der Abdeckabschnitt (29.1) bündig zu der Verglasungsrandseite (11) bzw. zu dem Rand ist.

10. Fensteranordnung (10; 9.10) nach einem der vorhergehenden Ansprüche, **dadurch gekennzeichnet, dass** mindestens ein Verstärkungselement (6.3; 9.6.3) der Verstärkungsvorrichtung (6; 9.6) eine äußere Leiste (6.31; 9.6.31) und eine innere Leiste (6.32; 9.6.32), die sich parallel zueinander erstrecken, sowie einen Zwischenabschnitt (6.33; 9.6.33) aufweist, der sich zwischen den äußeren und inneren Leisten (6.31, 6.32; 9.6.31, 9.6.32) erstreckt und diese verbindet, wobei sich das/die Verstärkungselement(e) (6.3; 9.6.3) in einer Aufbauaussparung (9; 9.9) des Aufbaus (8; 9.8) erstreckt/erstrecken.

11. Fensteranordnung (10) nach einem der vorhergehenden Ansprüche, **dadurch gekennzeichnet, dass** mindestens ein Verstärkungselement (6.3) der Verstärkungsvorrichtung (6) von einer Montageposition in eine Verriegelungsposition bewegbar oder schwenkbar ist.

12. Fensteranordnung (10; 9.10) nach einem der vorhergehenden Ansprüche, **dadurch gekennzeichnet, dass** ein Dichtungsinnenwandabschnitt (24; 9.24) und/oder ein Dichtungsaußenwandabschnitt (23; 9.23) ein integrierter Bestandteil der Dichtung (4; 9.4) ist; oder
dass der Dichtungsinnenwandabschnitt und/oder der Dichtungsaußenwandabschnitt einen separaten Abschnitt aufweist bzw. aufweisen, der nach der Montage der Verglasung an der Dichtung befestigt ist; oder
dass der Dichtungsinnenwandabschnitt (24) und/oder der Dichtungsaußenwandabschnitt mindestens einen beweglichen Abschnitt (24.1) aufweist/aufweisen, der gelenkig oder faltbar mit der Dichtung (4) verbunden oder gekoppelt ist, wobei sich der bewegliche Abschnitt (24.1) während der Montage der Verglasung (1) in einer geöffneten Stellung befindet, um den Zugang zu einem oder mehreren beweglichen Verstärkungselementen (6.3) der Verstärkungsvorrichtung (6) zu ermöglichen und diese von einer Montageposition in eine Verriegelungsposition bewegen zu können, und wobei nach dem Bewegen des Verstärkungselements bzw. der Verstärkungselemente (6.3) der bewegliche Abschnitt (24.1) in eine geschlossene Stellung geschoben ist, in der der Zugang zu dem beweglichen Verstärkungselement bzw. den beweglichen Verstärkungselementen (6.3) verschlossen ist und der bewegliche Abschnitt (24.1) der Dichtung (4) die Aufbauoberfläche (53; 54) berührt.

13. Fensteranordnung (10; 9.10) nach einem der vorhergehenden Ansprüche, **dadurch gekennzeichnet, dass** die Verstärkungsvorrichtung (6; 9.6) eine Halterung (29; 9.29) bzw. Klammer, mindestens einen Einsatz (6.1; 9.6.1) oder mehrere Einsätze (6.1; 9.6.1), eine Ausgleichsleiste (6.2; 9.6.2) und mindestens ein Verstärkungselement (6.3; 9.6.3) oder mehrere Verstärkungselemente (6.3; 9.6.3) aufweist, das/die an der Ausgleichsleiste (6.2; 9.6.2) angebracht ist/sind und sich in einer Aubauaussparung (9; 9.9) zwischen parallelen Innen- und Außenwänden (51, 52) der profilierten Öffnungsrandseite (5; 9.5) oder Seiten des Aufbaus (8; 9.8) erstreckt/erstrecken.

14. Fensteranordnung (10; 9.10) nach Anspruch 13, **dadurch gekennzeichnet, dass** die Dichtung (4; 9.4) einen Dichtungsinnenwandabschnitt (24; 9.24) bzw. Innensteg, einen Dichtungsaußenwandabschnitt (23; 9.23) bzw. Außensteg und einen Dichtungszwischenabschnitt (25; 9.25) aufweist, der sich zwischen den Dichtungsaußen- und -innenwandabschnitten (23, 24) erstreckt, wobei sich der Dichtungsinnenwandabschnitt (24; 9.24) an einer Innenfläche (2.1; 9.2.1) der Verglasung (1; 9.1) und an einer inneren Aufbaufläche (53; 9.53) des Aufbaus (8; 9.8) erstreckt und wobei sich der Dichtungsaußenwandabschnitt (23; 9.23) an einer Außenfläche (3.1; 9.3.1) der Verglasung (1; 9.1) und an einer äußeren Aufbaufläche (54; 9.54) des Aufbaus (8; 9.8) erstreckt und wobei sich der Dichtungszwischenabschnitt (25; 9.25) zwischen der Halterung (29; 9.29) und der Ausgleichsleiste (6.2; 9.6.2) der Verstärkungsvorrichtung (6; 9.6) erstreckt.

## Revendications

1. Ensemble de fenêtre (10; 9.10) pour véhicule ou bâtiment, notamment pour train de voyageurs à grande vitesse, comprenant un vitrage (1; 9.1) composé d'une ou plusieurs vitres (2, 3; 9.2, 9.3) en verre, plastique et/ou céramique, une ouverture de fenêtre (7; 9.7) ménagée dans une construction (8; 9.8), un joint d'étanchéité (4; 9.4) en forme de cadre, disposé entre le vitrage (1; 9.1) et la construction (8; 9.8) et maintenant le vitrage (1; 9.1) sur la construction (8; 9.8) à l'intérieur de l'ouverture de fenêtre (7; 9.7), et un dispositif de renforcement (6; 9.6) pour renforcer le joint (4, 9.4), **caractérisé en ce**
**que** le dispositif de renforcement (6; 9.6) comprend un support (29; 9.29) et au moins un insert (6.1; 9.6.1) ou plusieurs inserts (6.1; 9.6.1), et une bande d'égalisation (6.2; 9.6.2) et que le joint (4; 9.4) comprend une partie intermédiaire (25; 9.25) disposée entre le support (29; 9.25) et la bande d'égalisation (6.2; 9.6.2), le ou les inserts (6.1; 9.6.1) reliant le support (29; 9.29) à la bande d'égalisation (6.2; 9.6.2).

2. Ensemble de fenêtre (10; 9.10) selon la revendication 1, **caractérisé en ce que**:
le vitrage (1; 9.11) comprend une face (11; 9.11) du bord du vitrage ou un bord;
la construction (8; 9.8) comprend une face (5; 9.5) du bord d'ouverture définissant l'ouverture (7; 9.7) de la fenêtre ménagée dans la construction (8; 9.8); et
le joint (4; 9.4) maintient le vitrage (1; 9.1) sur la construction (8; 9.8) en recevant la face (5; 9.5) du bord d'ouverture ou le bord de la construction (8; 8.9) et la face (11; 9.11) du bord du vitrage ou le bord du vitrage (1; 9.1).

3. Ensemble de fenêtre (10; 9.10) selon la revendication 1 ou 2, **caractérisé en ce que** le dispositif de renforcement (6; 9.6) comprend au moins un insert (6.1; 9.6.1) disposé le long du périmètre ou de la circonférence du joint (4; 9.4) pour renforcer le joint (4, 9.4).

4. Ensemble de fenêtre (10; 9.10) selon l'une des revendications précédentes, **caractérisé en ce que** le dispositif de renforcement est fixe (9.6) ou au moins partiellement mobile (6) lors de l'installation ou du montage du vitrage (1; 9.1) sur la construction (8; 9.8) ou la carrosserie.

5. Ensemble de fenêtre (10; 9.10) selon l'une des revendications précédentes, **caractérisé en ce que** la face (5; 9.5) du bord de la construction (8; 8.9) est profilé et comporte un évidement circonférentiel (9; 9.9) entre les parois parallèles (51; 9.51) et (52; 9.52) du bord profilé de la construction (8; 9.8); et
que le dispositif de renforcement (6; 9.6) comprend au moins un ou plusieurs éléments de renforcement (6.3; 9.6.3) s'étendant dans l'évidement (9; 9.9) entre les parois parallèles intérieure et extérieure (51; 9.51) et (52; 9.52) du bord profilé de la construction (8; 9.8).

6. Ensemble de fenêtre (10; 9.10) selon l'une des revendications précédentes, **caractérisé en ce que** le support (29; 9.29) est disposé ou collé sur une face périphérique extérieure (11; 9.11) du bord du vitrage ou sur un bord du vitrage (1; 9.1).

7. Ensemble de fenêtre (10; 9.10) selon l'une des revendications précédentes, **caractérisé en ce que** le support (29) présente une partie de recouvrement (29.1; 9.29.1) recouvrant la face périphérique extérieure (11; 9.11) du vitrage, une partie intérieure (29.2; 9.29.2) s'étendant sur la surface intérieure (2.1; 9.2.1) du vitrage (1; 9.1), et une partie extérieure (29.3; 9.29.3) s'étendant sur une surface extérieure (3.1; 9.3.1) du vitrage (1; 9.1), les parties intérieure et extérieure (29.2; 9.29.2) et (29.3; 9.29.3) sont sensiblement perpendiculaires à la partie de recouvrement (29.1; 9.29.1) du support (29; 9.29) et parallèles à la surface intérieure et la surface extérieure (2.1, 3.1; 9.2.1, 9.3.1), la partie de recouvrement (29.1; 9.29.1) s'étendant entre les parties intérieure et extérieure (29.2; 9.29.2) et (29.3; 9.29.3) du joint (4; 4.9).

8. Ensemble de fenêtre (10) selon l'une des revendications précédentes, **caractérisé en ce que** le support (29) comprend plusieurs trous traversants de fixation (29.4) ou alésages de fixation définis par des douilles ou manchons correspondants (29.5) s'étendant depuis un espace de verre (26) entre des vitres parallèles (2, 3) à travers les trous traversants de fixation (29.4) au-delà de la face (11) du bord du vitrage ou du bord du vitrage (1) jusque dans le joint (4).

9. Ensemble de fenêtre (10) selon l'une des revendications précédentes, **caractérisé en ce que** la partie de recouvrement (29.1) du support (29) est disposée dans des évidements d'égalisation correspondants (11.1 et 11.2) prévus sur la face (11) du bord du vitrage ou le bord des vitres intérieure et extérieure (2 et 3) du vitrage (1) pour égaliser une épaisseur de la partie de recouvrement (29.1) du support (29) de telle sorte que la partie de recouvrement (29.1) affleure la face (11; 9.11) du bord du vitrage ou le bord du vitrage.

10. Ensemble de fenêtre (10; 9.10) selon l'une des revendications précédentes, **caractérisé en ce qu'**au moins un élément de renforcement (6.3; 9.6.3) du dispositif de renforcement (6; 9.6) comprend une barre extérieure (6.31; 9.6.31) et une barre intérieure (6.32; 9.6.32) parallèles entre elles, et une partie intermédiaire (6.33; 9.6.33) reliant les barres extérieure et intérieure (6.31, 6.32; 9.6.31, 9.6.32), le ou les éléments de renforcement (6.3; 9.6.3) s'étendant dans un évidement (9; 9.9) de la construction (8; 9.8).

11. Ensemble de fenêtre (10) selon l'une des revendications précédentes, **caractérisé en ce qu'**au moins un élément de renforcement (6.3) du dispositif de renforcement (6) est mobile ou pivotant d'une position de montage à une position verrouillée.

12. Ensemble de fenêtre (10; 9.10) selon l'une des revendications précédentes, **caractérisé en ce qu'**une partie de paroi intérieure (24; 9.24) et/ou une partie de paroi extérieure (23; 9.23) du joint fait partie intégrante du joint (4; 9.4); ou **en ce que** la partie de paroi intérieure et/ou la partie de paroi extérieure du joint comportent une partie séparée fixée au joint après le montage du vitrage; ou la paroi intérieure (24) et/ou la paroi extérieure du joint comprennent au moins une partie mobile (24.1) reliée ou accouplée au joint (4) de manière articulée ou pliable; lors du montage du vitrage (1), la partie mobile (24.1) est en position ouverte pour permettre l'accès à un ou plusieurs éléments de renforcement mobiles (6.3) du dispositif de renforcement (6) afin de les déplacer de la position de montage à la position verrouillée ; et après le déplacement du ou des éléments de renforcement (6.3), la partie mobile (24.1) est poussée en position fermée, ce qui permet d'accéder à l'élément de renforcement mobile (6.3) et de mettre la partie mobile (24.1) du joint (4) en contact avec la surface (53; 54) de la construction.

13. Ensemble de fenêtre (10; 9.10) selon l'une des revendications précédentes, **caractérisé en ce que** le dispositif de renforcement (6; 9.6) comprend un support (29; 9.29), au moins un insert (6.1; 9.6.1) ou plusieurs inserts (6.1; 9.6.1), une bande d'égalisation (6.2; 9.6.2) et au moins un élément de renforcement (6.3; 9.6.3) ou plusieurs éléments de renforcement (6.3; 9.6.3) montés sur la bande d'égalisation (6.2; 9.6.2) et s'étendant dans un évidement (9; 9.9) de la construction entre des parois intérieure et extérieure parallèles (51, 52) de la face profile du bord d'ouverture (11; 9.11) de la construction (8; 9.8).

14. Ensemble de fenêtre (10; 9.10) selon la revendication 13, **caractérisé en ce que** le joint (4; 9.4) comprend une paroi intérieure (24; 9.24) ou âme intérieure, une paroi extérieure (23; 9.23) ou âme extérieure, et une partie intermédiaire (25; 9.25) s'étendant entre les parois extérieure et intérieure (23, 24), la paroi intérieure (24; 9.24) s'étend sur une surface intérieure (2.1; 9.2.1) du vitrage (1; 9.1) et sur une surface intérieure (53; 9.53) de la construction (8; 9.8), et la paroi extérieure (23 ; 9.23) s'étend sur une surface extérieure (3.1; 9.3.1) du vitrage (1; 9.1) et sur une surface extérieure (54; 9.54) de la construction (8; 9.8), et la partie intermédiaire du joint (25; 9.25) s'étend entre le support (29; 9.29) et la bande d'égalisation (6.2; 9.6.2) du dispositif de renforcement (6; 9.6).
